# EUROPEAN PATENT APPLICATION

(11) **EP 0 755 970 A1**
(43) Date of publication of application: **29.01.1997**
(21) Application number: 96305339.2
(22) Date of filing: 19.07.1996
(51) Int. Cl.: C08K 5/01, C08L 23/04

(54) **Process for the extrusion of polyethylene**

(30) Priority: 21.07.1995 US 1385; 24.05.1996 US 652959
(71) Applicant: UNION CARBIDE CHEMICALS & PLASTICS TECHNOLOGY CORPORATION, Danbury, Connecticut 06817-0001 (US)
(72) Inventor: Rifi, Mahmoud R., Kendall Park, New Jersey 08824 (US); Martino, Carlo P., Somerville, New Jersey 08876 (US)
(74) Representative: Allard, Susan Joyce

(57) **Abstract**

A process for extrusion comprising:
(i) blending
   (a) one or more polyethylene(s), each polyethylene being made by a low pressure process and having non-uniform comonomer distribution;
   (b) one or more polyethylene(s), each polyethylene being made by a low pressure process and having an essentially uniform comonomer distribution, in an amount of about 1 to about 30 parts by weight of said polyethylene(s) per 100 parts by weight of the polyethylene(s) of component (a); and
   (c) one or more saturated alicyclic hydrocarbon(s), said hydrocarbon(s) being liquid at process temperature, non-polar, essentially amorphous, and containing less than about 15 percent by weight paraffin wax, in an amount of about 0.5 to about 15 parts by weight of hydrocarbon(s) per 100 parts by weight of the polyethylene(s) of component (a); and
(ii) extruding the blend.

## Description

### Technical Field

This invention relates to a process for the extrusion of polyethylene.

### Background Information

To be commercially competitive, newly fabricated articles including films, bottles, other containers such as pails, dishpans, and laundry baskets, and container lids require improvement in one or more of numerous properties such as environmental stress cracking resistance (ESCR), impact resistance, die swell, shrinkage, and melt fracture, and the manufacturers of these articles require resins, which will exhibit improved processability. In addition, the surface of the article should be smooth and essentially free of additives, which detract from appearance and other properties. Because of its toughness, strength, and chemical resistance, polyethylene has been used advantageously in the above mentioned applications, but as the molecular weight of the polyethylene increases, the processability decreases. Further, processability decreases with a narrowing of the molecular weight distribution, Industry is constantly seeking a balance between processability and properties, and desirous of obtaining polyethylenes which reflect an improvement in both.

### Disclosure of the Invention

An object of this invention, therefore, is to provide an enhanced process for the extrusion of polyethylene in which both processability and the properties of the ultimate polyethylene products are improved, and a resin composition adapted for such a process. Other objects and advantages will become apparent hereinafter.

According to the present invention, the above object is met by a process for extrusion comprising:
(i) blending (a) one or more polyethylene(s), each
   polyethylene being made by a low pressure process and having non-uniform comonomer distribution;
   (b) one or more polyethylene(s), each polyethylene being made by a low pressure process and having an essentially uniform comonomer distribution, in an amount of about 1 to about 30 parts by weight of said polyethylene(s) per 100 parts by weight of the polyethylene(s) of component (a); and
   (c) one or more saturated alicyclic hydrocarbon(s), said hydrocarbon(s) being liquid at process temperature, non-polar, essentially amorphous, and containing less than about 15 percent by weight paraffin wax, in an amount of about 0.5 to about 15 parts by weight of hydrocarbon(s) per 100 parts by weight of the polyethylene(s) of component (a); and
(ii) extruding the blend.

Another embodiment of the present invention is reflected in a particulate polyethylene blend comprising (a) one or more polyethylene(s), each polyethylene being made by a low pressure process and having a non-uniform comonomer distribution; (b) one or more polyethylene(s), each polyethylene being made by a low pressure process and having an essentially uniform comonomer distribution, in an amount of about 1 to about 30 parts by weight of said polyethylene(s) per 100 parts by weight of the polyethylene(s) of component (a); and (c) one or more saturated alicyclic hydrocarbon(s), said hydrocarbon(s) being liquid at blending temperatures, non-polar, essentially amorphous, and containing less than about 15 percent by weight paraffin wax, in an amount of about 0.5 to about 15 parts by weight of hydrocarbon(s) per 100 parts by weight of the polyethylene(s) of component (a) wherein each polyethylene blend particle has a crystalline phase and an amorphous phase and the surface of each polyethylene blend particle is essentially free of said hydrocarbon(s).

### Description of the Preferred Embodiment(s)

Polyethylene, as that term is used herein, is a copolymer of ethylene and a minor amount of one or more alpha-olefins having at least 3 carbon atoms, and preferably having 4 to 8 carbon atoms, or a mixture of such polymers. The mixture can be a mechanical blend or an in situ blend. Each polyethylene will have a crystalline phase and an amorphous phase.

The polyethylenes used in subject invention are preferably produced in the gas phase by various low pressure processes. They can also be produced in the liquid phase in solutions or slurries by conventional techniques, again at low pressures. Low pressure processes are typically run at pressures below 1000 psi whereas high pressure processes are typically run at pressures above 15,000 psi. Typical catalyst systems, which can be used to prepare these polyethylenes, are magnesium/titanium based catalyst systems, which can be exemplified by the catalyst system described in United States patent 4,302,565 (heterogeneous polyethylenes); vanadium based catalyst systems such as those described in United States patents 4,508,842 (heterogeneous polyethylenes) and 5,332,793; 5,342,907; and 5,410,003 (homogeneous polyethylenes) ; a chromium based catalyst system such as that described in United States patent 4,101,445; metallocene catalyst systems such as those described in United States patents 4,937,299 and 5,317,036 (homogeneous polyethylenes); or other transition metal catalyst systems. Many of these catalyst systems are often referred to as Ziegler-Natta catalyst systems. Catalyst systems, which use chromium or molybdenum oxides on silica-alumina supports, are also useful. Typical processes for preparing the polyethylenes are also described in the aforementioned patents. Typical in situ polyethylene blends and processes and catalyst systems for providing same are described in United States Patents 5,371,145 and 5;405,901.

As noted above, the component (a) polyethylene(s) have a non-uniform comonomer distribution and are often referred to as heterogeneous polyethylene(s). They generally have a polydispersity of about 3.5 to about 50. The component (b) polyethylenes have an essentially uniform comonomer distribution and are often referred to as homogeneous polyethylene(s). They often have a polydispersity in the range of about 1.5 to about 3.5, but are available beyond that range. The homogeneous polyethylenes in the narrower polydispersity ranges can be characterized by single and relatively low DSC melting points. Polydispersity is a measure of the breadth of the molecular weight distribution. It is represented by the ratio Mw/Mn. Mw stands for weight average molecular weight and Mn stands for number average molecular weight.

All of the polyethylene(s) are particulate and can be in the form of porous granules or pellets. The porous granules of each polyethylene generally have a diameter in the range of about 25 microns to about 2600 microns. Regardless of its form, the polyethylene can have a density in the broad range of 0.870 to 0.965 gram per cubic centimeter. High density heterogeneous polyethylene, which has a density equal to or greater than 0.940 gram per cubic centimeter, is particularly useful in the process of this invention. Very low density, linear low density, and medium density polyethylenes are also useful in subject process. Preferred densities for injection molding are greater than 0.915 gram per cubic centimeter and for blow molding are greater than 0.930 gram per cubic centimeter. If the polyethylene is in pellet form, the blending step is carried out with the polyethylene in the molten state. In any case, the blending can take place in a blender or extruder adapted for blending the three components.

The molecular weight of each of the polyethylenes can be in the range of about 20,000 to about 1,000,000 and is preferably in the range of 25,000 to about 500,000.

With regard to the heterogeneous polyethylene(s), the flow index can be in the range of about 0.1 to about 80 grams per 10 minutes, and is preferably in the range of about 2 to about 75 grams per 10 minutes, particularly for the purpose of blow molding and film extrusion. The melt index can be in the range of about 5 to about 160 grams per 10 minutes and is preferably in the range of about 7 to about 150 grams per 10 minutes for the purpose of injection molding. Melt index is determined under ASTM D-1238, Condition E. It is measured at 190°C and 2.16 kilograms and reported as grams per 10 minutes. Flow Index is determined under ASTM D-1238, Condition F. It is measured at 190°C and 21.6 kilograms and reported as grams per 10 minutes.

With regard to the homogeneous polyethylene(s), the flow/melt indices can run from a flow index of about 1 gram per 10 minutes to a melt index of about 160 grams per 10 minutes, and preferably runs from a flow index of about 5 grams per 10 minutes to a melt index of about 50 grams per 10 minutes, particularly for the purpose of blow molding and film extrusion. The melt index can be in the range of about 5 to about 160 grams per 10 minutes and is preferably in the range of about 7 to about 150 grams per 10 minutes for the purpose of injection molding.

For all of the polyethylenes: The portion of the copolymer attributed to the alpha-olefin comonomer(s) can be in the range of about 1 to about 50 percent by weight'based on the weight of the copolymer and is preferably in the range of about 2 to about 15 percent by weight based on the weight of the copolymer. There can be more than one alpha-olefin comonomer, but there is usually no more than one or two. The balance of the copolymer is ethylene. The preferred comonomers are 1-butene, 1-hexene, 4-methyl-1-pentene, and 1-octene although the number of carbon atoms can be in the range of 3 to 12, if desired. On addition of the hydrocarbon, each polyethylene blend particle increases its modality, for example, from monomodal to bimodal and from bimodal to trimodal. Thus, the post-blend polyethylene(s) can be characterized as multimodal.

The component (b) polyethylene(s) can be present in the mixture of polyethylene(s) and hydrocarbon(s) in an amount of about 1 to about 30 parts by weight of component (b) polyethylene(s), i.e., homogeneous polyethylene(s), per 100 parts by weight of component (a) polyethylene(s), i.e., heterogeneous polyethylene(s), and are preferably present in an amount of about 5 to about 20 parts by weight.

As noted above, the hydrocarbon(s) are saturated alicyclic hydrocarbon. They are unsubstituted. Alicyclic hydrocarbons are mixtures of aliphatic and cycloaliphatic hydrocarbons. The hydrocarbon(s) are generally liquid at ambient temperatures; are liquid at process temperature, non-polar, essentially amorphous, and contain less than 15 percent by weight paraffin wax, preferably less than one percent by weight paraffin wax. No paraffin wax would be most preferable, but this is not considered practical or necessary for the composition applications. The liquid hydrocarbons can have a viscosity in the range of about 200 to about 1000 SUS (Saybolt Universal Seconds) at 100°F (37.8°C) and preferably have a viscosity in the range of about 250 to about 800 SUS at 100°F. Examples of these hydrocarbons are Kaydol® 350, 380, and 550 hydrocarbons. Kaydol® 350 is reported to contain 11.8 percent by weight paraffin wax and Kaydol® 550 is reported to contain less than one percent by weight paraffin wax. The molecular weight of these hydrocarbons is in the range of about 200 to about 5000. The hydrocarbon(s) can be present in the mixture or blend of polyethylene(s) and hydrocarbon(s) in an amount of about 0.5 to about 15 parts by weight of hydrocarbon(s) per 100 parts by weight of polyethylene(s), and are preferably present in an amount of about 3 to about 12 parts by weight. These values refer to total hydrocarbons and total polyethylenes. In any case, the amount of hydrocarbon(s) should be such that the surface of each particle of polyethylene resin is essentially free of these hydrocarbon(s). The hydrocarbon(s) are also miscible with the polyethylene at process temperatures, and, in the suggested proportions, reside in the amorphous phase of the polyethylene.

For the purposes of this specification, extrusion processes shall be considerea to include conventional extrusion processes such as blown tubular film extrusion ( see discussion in United States Patent 4,814,135) and pipe and sheet extrusion, and blow molding, injection molding, rotational molding, and slot casting.

In the case of porous granular polyethylene, the hydrocarbon(s) are usually dry blended with the polyethylene(s) prior to extrusion (preblending), but the hydrocarbon(s) and resin can be blended in the extruder itself under melt processing conditions, if desired. Preblending is preferable, however, since it shortens the mixing time and is a key factor in achieving uniform distribution of the hydrocarbon in the resin. In the case of pelletized polyethylene, the polyethylene is in the molten state when the blending is initiated. The polyethylene(s) mix readily with the hydrocarbon(s) without the use of heat except, as noted, when it is in pelletized form. Preblending can be carried out at ambient or elevated temperatures, however. Mixers and extruders useful in carrying out the process of the invention are conventional off-the-shelf equipment. Mixers, which can be used to blend the resin and the liquid hydrocarbon, are, for example, Banbury™ or other internal mixers, two roll mills, Baker Perkins™ or similar sigma blade mixers, ribbon blenders, and Henschel™ mixers. As noted, extruders can also be used to mix the resin and the hydrocarbon(s). Blending can also be effected by injecting the hydrocarbon(s) into fluidized polyethylene(s). Another preferred blending technique is to add the hydrocarbon(s) to the polymerization reactor. The advantage of this technique is improved homogeneity of the blend with an attendant improvement in many of the improved properties achieved in dry or melt blending. It will be understood that sufficient hydrocarbon(s) have to be added to the reactor to provide the amount set forth above for the blend.

Extruders and processes for extrusion are described in United States patents 4,169,679; 4,814,135; 4,857,600; 5,076,988; and 5,153,382. Examples of various extruders are a single screw type such as one modified with a blown film die and air ring and continuous take off equipment; a blown film extruder; and a slot cast extruder. Twin screw extruders can also be considered. A typical single screw type extruder can be described as one having a hopper at its upstream end and a die at its downstream end. The hopper feeds into a barrel, which contains a screw. At the downstream end, between the end of the screw and the die, is a screen pack and a breaker plate. The screw portion of the extruder is considered to be divided up into three sections, the feed section, the compression section, and the metering section, and multiple heating zones from the rear heating zone to the front heating zone, the multiple sections and zones running from upstream to downstream. If it has more than one barrel, the barrels are connected in series. The length to diameter ratio of each barrel is in the range of about 16:1 to about 30:1. The extrusion can take place at temperatures in the range of about 160 to about 270 degrees C, and is preferably carried out at temperatures in the range of about 180 to about 240 degrees C. In wire coating, where the material is crosslinked after extrusion, the die of the crosshead feeds directly into a heating zone, and this zone can be maintained at a temperature in the range of about 130°C to about 260°C, and preferably in the range of about 170°C to about 220°C.

A description of typical injection molding apparatus can be found in the Injection Molding Handbook, edited by Rosato et al, published by Van Nostrand, New York, 1986, pages 10 and 11, and Injection Molding, Rubin, published by John Wiley & Sons, New York, 1972, pages 5 and 6. Typical conditions are described in United States Patent 4,390,677.

Advantages of the blend of polyethylene(s) and hydrocarbon(s) are that the processability and one or more properties of the ultimate product (as measured on films or plaques) are improved when the blend is compared with the same or similar polyethylene(s) having similar densities, melt indices, and/or melt flow ratios, without the hydrocarbon(s), i.e., there is essentially no bleeding; there are essentially no hydrocarbon(s) on the surface of each polyethylene particle or on the surface of the articles of manufacture produced by the extrusion of the polyethylene(s); the ESCR and the impact resistance are improved; die swell, diameter swell, shrinkage, melt fracture, and modulus (when desirable) are reduced; surfaces are smooth; and gels are reduced in in situ blends. Further, there is improvement in extensional viscosity; tangent delta (enhanced chain entanglement/less orientation/higher dart drop); notched Izod; beta transition temperature; spiral flow; and shear thinning. The accompanying multimodality is considered at least partially responsible for improved processability, lower density, and lower modulus. A particular advantage of the three component blend of this invention is a further improvement in processability and in impact properties when compared to a two component blend of polyethylene(s) and hydrocarbon(s).

Conventional additives can be added to the hydrocarbon modified polyethylene during the preblending step and/or the extrusion step, and, in some cases, directly to the polymerization reactor. One method for addition involves first blending the desired additive(s) with the hydrocarbon(s) and then blending the mixture with the polyethylene(s). Stabilization packages are advantageously added in this way. The amount of additive is usually in the range of about 0.01 to about 60 percent by weight based on the weight of the resin. Useful additives are antioxidants, ultraviolet absorbers, antistatic agents, pigments, dyes, fillers, slip agents, fire retardants, plasticizers, processing aids, lubricants, stabilizers, smoke inhibitors, viscosity control agents, vulcanizing agents, crosslinking agents, crosslinking catalysts, and crosslinking boosters.

The patents mentioned in this specification are incorporated by reference herein.

The invention is illustrated by the following examples.

### Example 1

A copolymer of ethylene and 1-hexene having a melt index of 0.5 gram per 10 minutes; a melt flow ratio of 18; and a density of 0.937 gram per cubic centimeter is blended with 5 percent by weight (based on the weight of the copolymer) of a saturated alicyclic hydrocarbon, which is liquid at extrusion temperature, non-polar, essentially amorphous, and contains less than about 15 percent by weight paraffin wax. The hydrocarbon has a viscosity of 350 SUS at 100 degrees F; a density of 0.877 gram per cubic centimeter; and a molecular weight of 800 (it is presently sold as Kaydol® 350 white oil). It also complies with FDA regulations for food contact. Also added to the blend are two antioxidants, i.e., 1200 parts per million by weight (ppm) of tris-(2,4-di-tert-butyl-phenyl)phosphite and 1000 ppm of octadecyl-3-(3,5-di-tert-butyl-4-hydroxyphenyl)propionate. The blending is accomplished in a Prodex™ mixer having two mixing screws and a 3 inch screw with a 25:1 length to diameter ratio. The resin is also blended in the same manner with the antioxidants, but without the hydrocarbon as a control.

Note: The saturated alicyclic hydrocarbon will be referred to in the examples as SAHC.

The blend with the SAHC is found to be bimodal. Further, the blend is particulate and the surface of each particle is found to be essentially free of the SAHC.

The temperature profile and the head pressure are as follows:

| | **Control resin w/o SAHC** | **Resin with SAHC** |
|---|---|---|
| | **Temperature (° F)** | |
| Zones in extruder | | |
| 1 | 310 | 310 |
| 2 | 370 | 370 |
| 3 | 380 | 380 |
| 4 | 400 | 400 |
| Die | 410 | 410 |

| | **Other conditions** | |
|---|---|---|
| Melt temperature (°F) | 468 | 468 |
| Screw rpm | 90 | 90 |
| Amps | 22 | 20 |
| Head pressure (psi) | 4400 | 3920 |

The blend is extruded into a film on a Sterling™ extrusion line having a die size of 2 inches; a die gap of 40 mils; a screw size of 1 1/2 inches with a 24:1 length to diameter ratio; and a frost line height (FLH) of 8 inches. The blow-up ratio is 2:1. The lay flat is 9.5 inches.

The temperature profile and the head pressure are as follows:

| | **Control resin w/o SAHC** | **Resin with SAHC** |
|---|---|---|
| | **Temperature (° F)** | |
| Zones in extruder | | |
| 1 | 410 | 410 |
| 2 | 426 | 426 |
| 3 | 460 | 460 |
| 4 | 460 | 460 |
| Die | | |
| 1 | 460 | 460 |
| 2 | 460 | 460 |

| | **Other conditions** | |
|---|---|---|
| Compounding temperature (°F) | 498 | 495 |
| Screw rpm | 90 | 90 |
| Amps | 13.1 | 12 |
| Head pressure (psi) | 3930 | 3375 |

The properties of the blend and film are set forth in Table I:

**Table I**

| **property** | **control resin w/o SAHC** | **resin with SAHC** |
|---|---|---|
| film gauge (mil) | 1.0 | 1.0 |
| Elmendorf tear (grams per mil) | | |
| machine direction | 25 | 34 |
| transverse direction | 550 | 470 |
| dart drop (grams) | 68 | 75 |
| tensile strength (psi) | | |
| machine direction | 9000 | 7550 |
| transverse direction | 7000 | 5520 |
| elongation at break (percent) | | |
| machine direction | 485 | 525 |
| transverse direction | 750 | 710 |
| gloss (45 degrees) | 67 | 79 |
| haze (%) | 7.5 | 4.0 |

### Example 2

A heterogeneous copolymer of ethylene and 1-hexene having a flow index of 30 grams per 10 minutes; a melt flow ratio of 70; and a density of 0.953 gram per cubic centimeter is blended with (i) 5 percent by weight (based on the weight of the blend) of a homogeneous polyethylene prepared with a single site metallocene catalyst system, said polyethylene having a flow index of 59.5 grams per 10 minutes; a melt flow ratio of 15.7; and a density of 0.8868 gram per cubic centimeter and (ii) 5 percent by weight of a saturated alicyclic hydrocarbon, which is liquid at extrusion temperature, non-polar, essentially amorphous, and contains less than about 15 percent by weight paraffin wax. The hydrocarbon has a viscosity of 350 SUS at 100 degrees F; a density of 0.877 gram per cubic centimeter; and a molecular weight of 800 (it is presently sold as Kaydol® 350 white oil). It also complies with FDA regulations for food contact. Also added to the blend is an antioxidant, i.e., 400 parts per million by weight (ppm) of octadecyl-3-(3,5-di-tert-butyl,4,hydroxyphenyl)-propionate. This blend will be referred to as Blend I. The melt flow ratio of Blend I is 91.

The blending is accomplished in a Brabender™ mixer having a double compounding 3/4 inch screw.

The mixture of resins is also blended in the same manner with the antioxidant, but without the hydrocarbon. In this case, however, the single site metallocene catalyzed resin referred to under (i), above, is present in an amount of 10 percent by weight based on the weight of the blend. This blend will be referred to as Blend II. The melt flow ratio of Blend II is 66.

The temperature profile in the Brabender™ mixer is as follows:

| **temperature zones** | **degrees C** |
|---|---|
| 1 | 150 |
| 2 | 160 |
| 3 | 190 |
| die | 190 |
| **other conditions** | |
| screw rpm | 94 |
| head pressure (psi) | 340 |

Note: The saturated alicyclic hydrocarbon will be referred to in the examples as SAHC.

The blend with the SAHC is found to be bimodal. Further, the blend is particulate and the surface of each particle is found to be essentially free of the SAHC.

Plaques are prepared from Blend I and Blend II.

The properties of Blend I and Blend II are as follows:

| **Properties** | **Blend I** | **Blend II** |
|---|---|---|
| tensile strength (psi) | 3155 | 3473 |
| elongation (percent) | 750 | 650 |
| | | |
| Izod impact (minus 40° C) | 0.95 | 1.0 |

Note: the processability of Blend I is better as evidenced by the higher melt flow ratio, which decreases the head pressure during compounding without any sacrifice in Izod impact. Elongation is also greater.

Notes to examples:
1. Melt Index (g/10 min) is determined under ASTM D-1238, Condition E. It is measured at 190°C and reported as grams per 10 minutes.
2. Flow Index is determined under ASTM D-1238, Condition F. It is measured at 10 times the weight used in the melt index test above.
3. Melt flow ratio is the ratio of flow index to melt index.
4. Density is determined under ASTM D-1505. A plaque is made and conditioned for one hour at 100°C to approach equilibrium crystallinity. Measurement for density is then made in a density gradient column and density values are reported in kilogram per cubic meter.
5. Film gauge is the thickness of the film. The value is given in mils or microns.
6. Dart impact (dart drop) is determined under ASTM D-1709, methods A and B. It is given in grams.
7. Elmendorf Tear is determined under ASTM D-1992. It is given in grams per mil.
8. The Notched Izod Impact Strength test is carried out at 0°C and minus 20°C under ASTM D-256. The results are reported in foot pounds per inch (ft. lbs/in).
9. Tensile Strength is measured in accordance with ASTM D-882.
10. Elongation is measured in accordance with ASTM D-882.
11. Haze is determined under ASTM D- 1003.
12. Gloss is determined under ASTM D- 2457.

## Claims

1. A process for extrusion comprising:
(i) blending (a) one or more
polyethylene(s), each polyethylene being made of a low pressure process and having non-uniform comonomer distribution;
(b) one or more poly-ethylene(s), each polyethylene being made of a low pressure process and having an essentially uniform comonomer distribution, in an amount of from 1 to 30 parts by weight of said polyethylene(s) per 100 parts by weight of the polyethylene(s) of component (a); and
(c) one or more saturated alicylic hydrocarbon(s), said hydrocarbon(s) being liquid or process temperature, non-polar, essentially amorphous, and containing less than 15 percent by weight paraffin wax, in an amount of from 0.5 to 15 parts by weight of hydrocarbon(s) per 100 parts by weight of the polyethylene(s) of component (a); and
(ii) extruding the blend.

2. A process as claimed in claim 1 wherein the density of the polyethylene of component (a) is equal to or greater than 0.940 gram per cubic centimeter.

3. A process as claimed in claim 1 or claim 2 wherein the viscosity of the hydrocarbon(s) is in the range of from 200 to 1000 SUS at 100 degrees F and the molecular weight of the hydrocarbon(s) is in the range of from 200 to 5000.

4. A particulate polyethylene blend comprising (a) one or more polyethylene(s), each polyethylene being made by a low pressure process and having a non-uniform comonomer distribution (b) one or more polyethylene being made by a low pressure process and having an essentially uniform comonomer distribution, in an amount of from 1 to 30 parts by weight of said polyethylene(s) per 100 parts by weight of the polyethylene(s) of component (a); and (c) one or more saturated alicyclic hydrocarbon(s), said hydrocarbon(s) being liquid at blending temperatures, non-polar, essentially amorphous, and containing less than 15 percent by weight paraffin wax, in an amount of from 0.5 to 15 parts by weight of hydrocarbon(s) per 100 parts by weight of the polyethylene(s) of component (a) wherein each polyethylene blend particle has a crystalline phase and an amorphous phase and the surface of each polyethylene blend particle is essentially free of said hydrocarbon(s).

5. A blend as claimed in claim 4 wherein the density of the polyethylene of component (a) is equal to or greater than 0.940 gram per cubic centimeter.

6. A blend as claimed in claim 4 or claim 5 wherein the viscosity of the hydrocarbon(s) is in the range of from 200 to 1000 SUS at 100 degrees F and the molecular weight of the hydrocarbon(s) is in the range of from 200 to 5000.

7. A blend as claimed in any one of claims 4 to 6 wherein the blend is made in the polymerization reactor(s) in which the polyethylene(s) are produced.

8. A blend as claimed in any one of claims 4 to 6 wherein each polyethylene blend particle is multimodal.

9. A particulate polyethylene blend comprising (a) one or more polyethylene(s), each polyethylene being made by a low pressure process and having a non-uniform comonomer distribution; (b) one or more polyethylene(s), each polyethylene being made by a low pressure process and having an essentially uniform comonomer distribution, in an amount of from 5 to 20 parts by weight of said polyethylene(s) per 100 parts by weight of the polyethylene(s) of component (a); and (c) one or more saturated alicylic hydrocarbon(s); said hydrocarbon(s) being liquid at blending temperatures, non-polar, essentially amorphous, and containing less than 15 percent by weight of paraffin wax, in an amount of from 0.5 to 15 parts by weight of hydrocarbon(s) per 100 parts by weight of the polyethylene(s) of component (a) wherein each polyethylene blend particle is essentially free of said hydrocarbon(s) with the following provisos:
(i) the viscosity of the hydrocarbon(s) is in the range of from 200 to 1000 SUS at 100 degrees F and the molecular weight of the hydrocarbon(s) is in the range of from 200 to 5000; and
(ii) each polyethylene blend particle is bimodal or trimodal.

10. A blend as defined in claim 9 wherein the blend is made in the polymerisation reactor(s) in which the polyethylene(s) are produced.
